# EUROPÄISCHE PATENTSCHRIFT

(11) **EP 1 803 192 B1**
(45) Veröffentlichungstag und Bekanntmachung des Hinweises auf die Patenterteilung: **31.03.2010**
(21) Anmeldenummer: 05803249.1
(22) Anmeldetag: 12.10.2005
(51) Int. Cl.: H01R 4/30, H01R 11/26

(54) **KABELSCHUH MIT MUTTER BZW. FUNKTIONSTEIL, VERFAHREN ZUR HERSTELLUNG EINES SOLCHEN KABELSCHUHS UND MUTTER**
CABLE LUG COMPRISING A NUT OR FUNCTIONAL PART, METHOD FOR THE PRODUCTION OF SUCH A CABLE LUG, AND NUT
COSSE DE CABLE COMPRENANT UN ECROU OU UN ELEMENT FONCTIONNEL, PROCEDE DE PRODUCTION D'UNE TELLE COSSE DE CABLE ET ECROU

(30) Priorität: 15.10.2004 DE 102004050485; 17.02.2005 DE 102005007203
(43) Veröffentlichungstag der Anmeldung: 04.07.2007
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2005/055176
(87) Internationale Veröffentlichungsnummer: WO 2006/042812

(56) Entgegenhaltungen:
- DE-U1- 9 412 215
- FR-A- 2 758 661
- US-A- 5 256 019

## Beschreibung

Die Erfindung betrifft zunächst einen Kabelschuh mit einem Aufnahme-Rohrabschnitt für das Kabel, einem angeformten, eine Bohrung aufweisenden Flachteil-Verbindungsabschnitt und einem an dem Flachteil-Verbindungsabschnitt unverlierbar gehalterten, vorzugsweise drehbar gehalterten, Funktionsteil, wobei das Funktionsteil durch einen in einen an diesem ausgebildeten Hinterschnitt hineinragenden Halterungs-Materialabschnitt gehaltert ist, der in einem zu dem unbeeinflussten umgebenden Bereich des Flachteil-Verbindungsabschnittes stufenartig abgesenkten Bereich wurzelt, wobei der Hinterschnitt mit einer axialen Erstreckung ausgebildet ist, die gleich oder kleiner der axialen Erstreckung, der Dicke, des unbeeinflussten Flachteil-Verbindungsabschnittes ist.

Derartige Kabelschuhe sind bereits in verschiedenen Ausgestaltungen bekannt geworden. Beispielsweise ist auf die DE 10310164 A1 und die DE 9412215 U1 zu verweisen.

Zum Stand der Technik ist weiter auf die EP 667 936 B2 zu verweisen. Darüber hinaus auch auf die US 5256019.

Die eingetragenen Unterlagen der DE 9412215 U1 beschreiben eine Verbindung zwischen einem Funktionsteil, wie einer Mutter oder Schraube, mit einem Flachteil-Verbindungsabschnitt eines Kabelschuhs, wobei der Funktionsteil nach einem Ein- oder Hindurchstecken durch den Flachteil-Verbindungsabschnitt zur Halterung darin verformt wird. Der Halterungs-Materialabschnitt ist an dem Flachteil-Verbindungsabschnitt umformungsfrei erzeugt.

Im Weiteren betrifft die Erfindung ein Verfahren zur Ausbildung einer unverlierbaren, aber eine Axial- und gegebenenfalls eine Drehbewegung ermöglichenden Verbindung eines Kabelschuhs mit einem Funktionsteil wie einer Mutter, wobei der Kabelschuh einen Aufnahme-Rohrabschnitt für das Kabel und einen Flachteil-Verbindungsabschnitt aufweist und das Funktionsteil in den unverformten Flachteil-Verbindungsabschnitt unter Eindringen in oder Durchsetzen einer darin ausgebildeten Bohrung eingepresst wird.

Insofern ist auch auf den bereits vorstehend genannten Stand der Technik zu verweisen. Bei dem aus der US 5256019 bekannten Verfahren wird im Zuge des Einpressens eine stufenartige Fläche ausgebildet, die zwei senkrecht zueinander, jeweils horizontal bzw. vertikal verlaufende Flächen aufweist. Hierdurch wird zwar das Ausbilden des gewünschten Halterungs-Materialabschnittes erreicht. Jedoch geht die gesamte Verformung in den vertikal unterhalb der zugeordneten Stufenfläche der Schraube bzw. des Funktionsteils liegenden Bereich des Flachteil-Verbindungsabschnittes des Kabelschuhs. Aus der FR 2758661 A ist ein Verfahren zur Ausbildung einer Verbindung eines Kabelschuhs mit einem Funktionsteil bekannt, bei welchem das Funktionsteil in einem vorverformten Flachteil-Verbindungsabschnitt eingepresst wird. Im Zuge der Einpressung des Funktionsteils wird eine solche Vorverformung praktisch wieder aufgehoben.

Schließlich betrifft die Erfindung auch eine vorzugsweise in eine Bohrung eines Flachteil-Verbindungsabschnitts eines Kabelschuhs einsteckbare und darin verpressbare Mutter, wobei die Mutter vor Verpressung einseitig, bezogen auf ihre Ein- oder Ausschraubrichtung, einen radial öffnenden, in Axialrichtung der Mutter gegebenen Hinterschnitt mit einer oberen und einer unteren Begrenzungsfläche aufweist.

Insoweit ist zum Stand der Technik auf die US 3253631, die DE 558873 und die DE 9412215 U1 zu verweisen, darüber hinaus auch auf die genannte FR 2758661 A.

Bei den eingangs genannten bekannten Kabelschuhen ist der Halterungs-Materialabschnitt jeweils ausfüllend in dem Hinterschnitt der Mutter oder des Funktionsteils aufgenommen oder der Hinterschnitt ist in axialer Richtung sehr groß ausgebildet und in einer Richtung durch das beginnende Gewinde gebildet (US 5256019). Die aus der FR 2758661 A bekannte Mutter muss nach Einführen in die Öffnung oder Bohrung erst noch zur sichernden Halterung an dem Teil, in das sie eingeführt ist, umformend bearbeitet werden.

Im Hinblick auf die bekannten Kabelschuhe mit Mutter bzw. Funktionsteil stellt sich der Erfindung die Aufgabe, eine Kombination dieser Teile zur Verfügung zu stellen, die bei günstigen Eigenschaften, insbesondere einer erwünschten Drehbarkeit des Funktionsteils, bei einer rationellen Herstellbarkeit zusammengefügt werden können.

Ausgehend von dem bekannten Verfahren stellt sich der Erfindung auch die Aufgabe, ein vorteilhaftes Verfahren zur Pressverbindung eines Funktionsteils wie einer Mutter mit einem Kabelschuh anzugeben.

Hinsichtlich der Mutter ist Aufgabe der Erfindung, eine solche Mutter anzugeben, die zur vorteilhaften Pressverbindung mit einem Fügepartner, wie bspw. dem Flachteil-Verbindungsabschnitt eines Kabelschuhs, geeignet ist.

Hinsichtlich eines Funktionsteils ist die Aufgabe bei einem Kabelschuh gelöst, bei welchem insbesondere vorgesehen ist, dass die stufenartige Absenkung rotationssymmetrisch ist sowie einen sich nach außen und oben öffnenden, mindestens eine Konusfläche aufweisenden Konusabschnitt aufweist. Die Verbindung der rotationssymmetrischen Ausbildung mit dem sich nach außen und oben öffnenden Konusabschnitt wirkt einer gegebenenfalls nicht gewünschten Verklemmung des Funktionsteils in dem Kabelschuh wirksam vor. Eine nicht gewünschte Verklemmung bedeutet nicht zugleich auch, dass nicht gleichwohl noch eine Drehhinderung vorliegen kann.

Hinsichtlich des Verfahrens stellt die Erfindung darauf ab, dass im Zuge der Einpressung in den Flachteil-Verbindungsabschnitt eine rotationssymmetrisch umlaufende, stufenartige Fläche ausgebildet wird, wobei jedenfalls eine der Stufenflächen als Konusfläche in einem spitzen Winkel zu einer Horizontalen oder einer Vertikalen verlaufend ausgeformt wird. Dadurch, dass die Stufenflächen in der genannten Ausgestaltung verlaufen, ist auch die senkrechte bzw. erfindungsgemäß schräg nach außen sich öffnende Stufenfläche von der Verformung wesentlich erfasst. Entsprechend ergibt sich auch nach Abschluss des Einpressvorgangs eine gewisse elastische Rückverformung, die dazu neigt, das Funktionsteil anzuheben. Aufgrund der genannten Verläufe der Stufenfläche ergibt sich eine weitgehende Freilage des Funktionsteils von den Stufenfläche was einer gegebenenfalls gewünschten Drehbarkeit des Funktionsteils vorteilhaft zugute kommt.

Hinsichtlich der Mutter ist die Aufgabe bei einem Gegenstand gelöst, bei dem wesentlich darauf abgestellt ist, dass der Hinterschnitt rotationssymmetrisch ausgebildet ist und die obere Begrenzungsfläche Teil einer an der Mutter ausgebildeten rotationssymmetrischen Stufenfläche ist. Die obere Begrenzungsfläche des Hinterschnitts geht unmittelbar in die genannte Stufenfläche, die sich letztlich immer nach oben und außen öffnet, über.

Es ist vorteilhaft, wenn die mit einem spitzen Winkel zur Senkrechten verlaufende Stufenfläche nochmals in eine Horizontalfläche übergeht. Diese Horizontalfläche ist entsprechend radial außerhalb der genannten Stufenfläche angeordnet.

Bevorzugt ist auch, dass der an der Mutter bzw. dem Funktionsteil ausgebildete Hinterschnitt in einem Bereich ausgebildet ist, der - jedenfalls bezogen auf die Mutter - kein zugeordnetes (Innen-) Gewinde aufweist.

Der Halterungs-Materialabschnitt wurzelt bevorzugt in einem zu einem umgebenen Bereich des Flachteil-Verbindungsabschnitts stufenartig abgesenkten Abschnitt des Flachteil-Verbindungsabschnitts.

Insbesondere ist auch bevorzugt, dass die genannten Stufenflächen in sich, unabhängig von ihrer Schrägausrichtung relativ zu einer Horizontalen oder Vertikalen, ebenflächig ausgebildet sind.

Hinsichtlich des Hinterschnitts ist auch bevorzugt, dass die untere Begrenzungsfläche des Hinterschnitts sich in vertikaler Projektion über mehr als die Hälfte, in radialer Richtung der zugeordneten Stufenflächen, die unterseitig des zugeordneten eigentlichen Mutterteils bzw. Kopfes des Funktionsteils ausgebildet ist, erstreckt. Dieser Hinterschnitt ist auch bevorzugt unabhängig vom Gewinde bzw. nicht in (radialer) Überdeckung zu einem Gewinde der Mutter ausgebildet. Die Innenfläche des Hinterschnittbereichs ist im Fall der Mutter zylindrisch ausgebildet. Die diesbezügliche Zylinderfläche geht in den Gewindegrund des in der Mutter ausgebildeten Innengewindes bevorzugt über. In axialer Richtung erstreckt sich der Hinterschnitt bevorzugt über ein Viertel oder mehr der Dicke des Flachteil-Verbindungsabschnittes.

Verfahrenstechnisch bzw. montagetechnisch wird so vorgegangen, dass die Bohrung in dem Flachteil-Verbindungsabschnitt des Kabelschuhs ausreichend groß ist, dass der nach unten vorstehende genannte, den Hinterschnitt aufweisende Hals der Mutter zwanglos in die Bohrung eingesteckt werden kann. Sodann wird von oben auf die Mutter Presskraft aufgebracht, welche die Einsenkung der genannten Stufenfläche in das Material des Flachabschnitts des Kabelschuhs erbringt, unter gleichzeitiger Vorwölbung des Halterungs-Materialabschnittes, ausgeformt aus dem Material des Flachteils des Kabelschuhs. Nach Entlastung der Mutter von der genannten Presskraft ist eine unverlierbare Sicherung der Mutter an dem Kabelschuh gegeben, bei gleichzeitiger freier Drehbarkeit der Mutter.

Der - zu einer Konusfläche führende - Winkel des ansteigenden Abschnittes der Stufenfläche ist bevorzugt ein spitzer Winkel, weiter bevorzugt im Bereich von 1 bis 60 Grad. Darüber hinaus bevorzugt im Bereich von 45 Grad. In die Offenbarung eingeschlossen sind aber auch alle diesbezüglichen Zwischenwerte wie 2, 3 etc. Grad oder 46, 47 etc. Grad.

Soweit die an einer Horizontalen orientierte Stufenfläche auch in einem Winkel zur Horizontalen verläuft, ist dieser Winkel bevorzugt auch ein spitzer Winkel. Weiter bevorzugt in den Winkelbereichen wie sie vorstehend bezüglich des ansteigenden Abschnittes der Stufenfläche angegeben sind. Und zwar kann der Winkel in diesem Fall sowohl positiv wie auch negativ zählend ausgebildet sein. Hierbei ist darüber hinaus bevorzugt, dass der Winkel der an der Horizontalen orientierten Stufenfläche (betragsmäßig) immer kleiner gewählt ist als derjenige der an der Vertikalen orientierten Stufenfläche.

Die Mutter mit den genannten Ausformungen kann zunächst als Drehteil hergestellt sein. Sie kann aber auch beispielsweise als Fliesspressteil hergestellt sein, wobei der genannte Halsabschnitt unten zunächst als zylindrische Röhre angeformt ist und in einem zweiten Schritt dann so angestaucht wird, dass sich der erforderliche und beschriebene Hinterschnitt ergibt.

Bei dem Kabelschuh handelt es sich bevorzugt um einen solchen, der aus einem Vollmaterial gebildet ist, wobei dann der Flachabschnitt durch Umformen angepresst ist.

Die genannte Verbindung zwischen der Mutter, die in der Regel aus einem Stahlwerkstoff besteht, oder einem sonstigen Funktionsteil, und dem Flachabschnitt des Kabelschuhs ist auch dadurch unterstützt, dass der Kabelschuh üblicherweise aus einem vergleichsweise weichen Material besteht. Nämlich aus Kupfer oder Aluminium.

Aufgrund der beschriebenen Ausgestaltung des Funktionsteils ergibt sich beim Einpressen eine charakteristische Verpresskurve. Zunächst nämlich mit einem über den Weg vergleichsweise flachen Anstieg der Kraft und sodann eine Abwinklung in einen zweiten Abschnitt der Verpresskurve, in dem die Kraft über den Weg aufgetragen stärker ansteigt. Diese Charakteristik ermöglicht eine vorteilhafte Steuerung der Verpressung in Bezug auf die aufgewandte Presskraft. Man kann eine typische, sich ausreichend im steilen Bereich der Kurve befindliche Presskraft vorgeben und ist bei Erreichen dieser Presskraft jeweils sicher, dass eine funktionsgemäße Halterung des Funktionsteils an dem Kabelschuh erreicht ist

Bevorzugt ist auch, dass die Bohrung in dem Kabelschuh mit einer Bohrungsstufe ausgebildet ist. Die Bohrungsstufe ist bereits vor der Verformung bevorzugt gegeben. Dies ist vorteilhaft im Hinblick auf eine Verbindung mit einem Bolzen, auf den der Kabelschuh bei einer Anwendung beispielsweise aufzusetzen ist. Dieser Bolzen, der kopfseitig ein Gewinde aufweist, weist unterhalb des Gewindes einen radialen Vorsprung auf. Auf dieser Fläche sitzt der Kabelschuh außerhalb der Bohrung auf. Um diesen Vorsprung hinsichtlich der Fläche möglichst vorteilhaft ausnutzen zu können, empfiehlt es sich, die Bohrung im unteren, dem Bolzen zugewandten Bereich enger auszubilden, also mit der genannten Bohrungsstufe zu versehen.

Hinsichtlich des Funktionsteils, insbesondere der Mutter, ist auch bevorzugt, dass die Horizontalfläche eine kreisförmige Außenkontur aufweist. Für eine übliche Mutter mit Mehrkantkontur, also beispielsweise Sechskantkontur, kann dies beispielsweise erreicht werden durch die Anformung eines unterseitigen Flansches an den Kopf des Funktionsteils, also hier an den Mehrkant der Mutter. Dieser Flansch weist oberseitig eine Aufsetzfläche auf, die vorteilhaft durch ein entsprechendes Druckwerkzeug genutzt werden kann. Dadurch, dass die Außenkontur rund ist, kann keine Behinderung einer gewünschten Drehbarkeit der Mutter etwa durch sechskantförmige Vertiefung aufgrund des Einpressens in der Oberfläche des Flachteil-Verbindungsabschnitts des Kabelschuhs auftreten.

Neben der bereits erwähnten Mutter kann als Funktionsteil auch eine Schraube in Frage kommen. Weiter kann es sich auch bspw. um eine Hülse oder auch einen Dorn handeln.

Nachstehend ist die Erfindung des Weiteren anhand der beigefügten Zeichnung, welche lediglich Ausführungsbeispiele darstellt, näher erläutert. Es zeigt:
- Fig. 1: einen Kabelschuh mit dem Flachteil zugeordneter Mutter, vor Verpressung;
- Fig. 2: den Gegenstand gemäß Fig.1, geschnitten im Bereich des Flachteils;
- Fig. 2a: eine Herausvergrößerung gemäß des Ausschnitts II a aus Fig. 2;
- Fig. 3: den Gegenstand gemäß Fig.1 in auf den Kabelschuh aufgesetzter Stellung;
- Fig. 4: eine Fig. 2 entsprechende Querschnittsdarstellung des Gegenstandes gemäß Fig. 3;
- Fig. 5: den Gegenstand gemäß Fig. 1 bzw. Fig. 3 in verpresster Stellung;
- Fig. 6: eine Fig. 2 bzw. Fig. 4 entsprechende Schnittdarstellung des Gegenstandes gemäß Fig. 5;
- Fig. 6a: eine Herausvergrößerung gemäß des Ausschnitts VI a aus Figur 6;
- Fig. 7: eine Darstellung bei auf einem Gewinde-Verbindungsbolzen aufgeschraubter Mutter;
- Fig. 8: eine Darstellung eines Funktionsteils in Form einer Schraube;
- Fig. 9: den Gegenstand gemäß Fig. 8 bei auf dem Flachteil des Kabelschuhs aufsitzender Schraube, vor Verpressung;
- Fig. 10: eine alternative Ausführungsform einer mit einem Kabelschuh verbundenen Mutter, in perspektivischer Ansicht;
- Fig.11: einen Querschnitt im Bereich des Flachteil-Verbindungsabschnittes durch den Gegenstand gemäß Fig. 10;
- Fig.11a: eine Herausvergrößerung gemäß dem Abschnitt XI a aus Fig. 11;
- Fig. 12: einen Querschnitt durch Figur 11 im eingepressten Zustand der Mutter;
- Fig. 13: eine perspektivische Ansicht einer weiteren Ausführungsform des Funktionsteils in Form einer Mutter, aufgesetzt auf den Kabelschuh;
- Fig. 14: einen Querschnitt durch den Gegenstand gemäß Fig. 13, vor der Verpressung;
- Fig. 15: eine Herausvergrößerung des Bereichs XV in Fig. 14;
- Fig.16: eine Darstellung gemäß Fig. 13, nach Verpressung;
- Fig. 17: einen Querschnitt durch den Gegenstand der Fig. 16 und
- Fig. 18: eine Herausvergrößerung des Bereichs XVIII in Fig. 17.

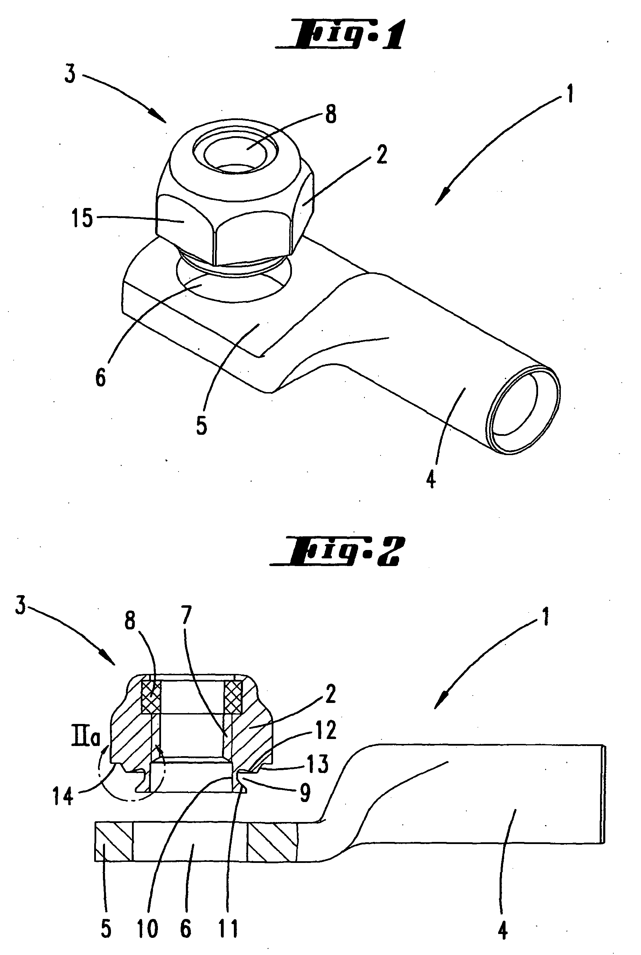

Dargestellt und beschrieben ist, zunächst mit Bezug zu den Figuren 1 bis 7, ein Kabelschuh 1 mit einem hier als Mutter 2 ausgebildeten Funktionsteil 3.

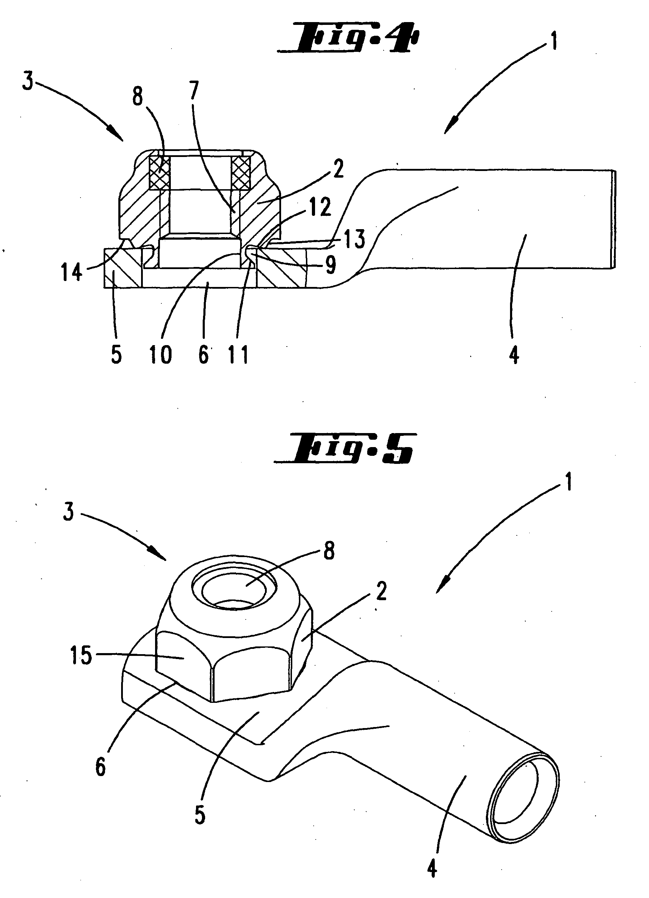

Zur lösungssicheren, das heißt gegen Lösung gesicherten, aber drehbaren Verbindung zwischen der Mutter 2 und dem Kabelschuh 1 wird die Mutter 2 mit dem Kabelschuh 1 verpresst, wie sich dies insbesondere aus den Figuren 5 bis 6 ergibt.

Der Kabelschuh 1 weist im Einzelnen einen Aufnahme-Rohrabschnitt 4 und einen Flachteil-Verbindungsabschnitt 5 auf. In den Rohrabschnitt 4 wird das Kabel 19 eingeführt, und darin dann beispielsweise pressgehaltert, dessen elektrisch zuverlässige Verbindung mittels des Kabelschuhs 1 erreicht werden soll.

Der beim Ausführungsbeispiel aus einem Vollmaterial gebildete Kabelschuh 1 weist weiter in dem bereits genannten pressverformten Flachteil-Verbindungsabschnitt 5 eine Bohrung 6 auf. In diese Bohrung 6 wird beim Ausführungsbeispiel die Mutter 2 eingesetzt und sodann durch Herunterpressen in der noch zu beschreibenden Weise verlierungssicher aber drehbar mit dem Kabelschuh 1, das heißt im Einzelnen dem Flachteil-Verbindungsabschnitt 5, verbunden.

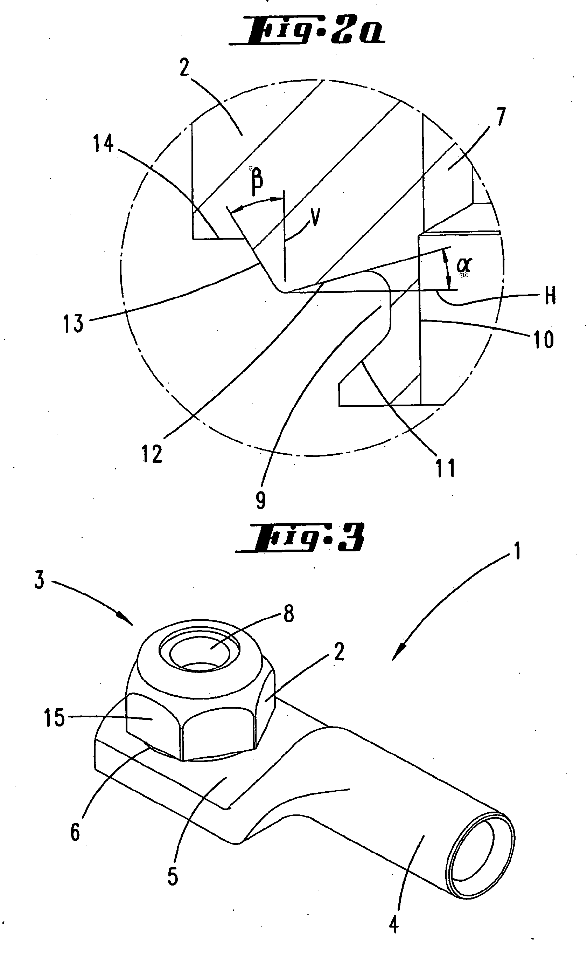

Wie sich in weiterer Einzelheit aus den Darstellungen der Figuren 2, 4 und 6 ergibt, weist die Mutter 2 ein Innengewinde 7 auf, beim Ausführungsbeispiel mit einem oberen Kunststoffeinsatz 8, um ein Lösen der Mutter 2 zu hindern Es handelt sich insoweit um eine selbst sichernde Mutter.

Der Kunststoffeinsalz 8 ist teilweise von einer Pressfläche 24 eingefasst.

Unterseitig ist an die Mutter 2 ein Hinterschnitt 9 angeformt. Beim Ausführungsbeispiel ist dieser Hinterschnitt 9 durch eine Dreh-Bearbeitung erreicht.

Der Hinterschnitt 9 setzt unterhalb des unteren Endes des Innengewindes 7 an. Innenseitig weist der Hinterschnitt 9 eine Zylinderfläche 10 auf, die mit dem Gewindegrund des Innengewindes 7 axial fluchtet.

Im Einzelnen ist der Hinterschnitt 9 durch eine untere Begrenzungsfläche 11 und eine obere Begrenzungsfläche 12 gebildet. Die obere Begrenzungsfläche 12 ist zugleich Teil einer unterseitig an der Mutter 2 ausgebildeten Stufenfläche.

Die Stufenfläche der Mutter 2, die im Einzelnen in der Lupendarstellung vergrößert dargestellt ist, ist gleichsam das Negativ der im Verpresszustand positiv ausbildenden Stufenfläche in dem Flachteil-Verbindungsabschnitt 5.

In weiterer Einzelheit besteht die Stufenfläche aus einer Vertikalflache 13 und der bereits angesprochenen Begrenzungsfläche 12. Beide Flächen, die Begrenzungsfläche 12 wie auch die Vertikalfläche 13 erstrecken sich bei den hier beschriebenen Ausführungsbeispielen relativ zu einer Horizontalen H bzw. einer Vertikalen V in einem spitzen Winkel α bzw. β. Der spitze Winkel α bzw. β ist bevorzugt im Bereich von 1 bis 60° ausgebildet. Weiter bevorzugt bezüglich α zwischen 10° und 30° und bezüglich β zwischen 20° und 50°. Beim Ausführungsbeispiel beträgt der Winkel α 15° und β 30°.

Die Vertikalfläche 13 geht radial außen in eine Horizontalfläche 14 über, die allerdings aufgrund der Sechskantausformung der Mutter 2 beim Ausführungsbeispiel über den Umfang mit unterschiedlicher radialer Erstreckung sich ausbildet.

Die Horizontalfläche 14 weist eine kreisförmige Außenkontur auf.

Diese unterschiedliche radiale Ausdehnung der Horizontalfläche 14 ergibt sich auch aus der Darstellung gemäß Figur 3, in welcher die Mutter 2 aufgesetzt auf den Flachteil-Verbindungsabschnitt 5 vor dem Verpressen dargestellt ist. Hier erstreckt sich teilweise die Bohrung 6 noch radial über eine zugeordnete vertikale Flachfläche 15 der Mutter 2.

In Figur 4 ist ein Querschnitt durch Figur 3 dargestellt, ebenfalls entsprechend in dem Zustand vor Verpressung.

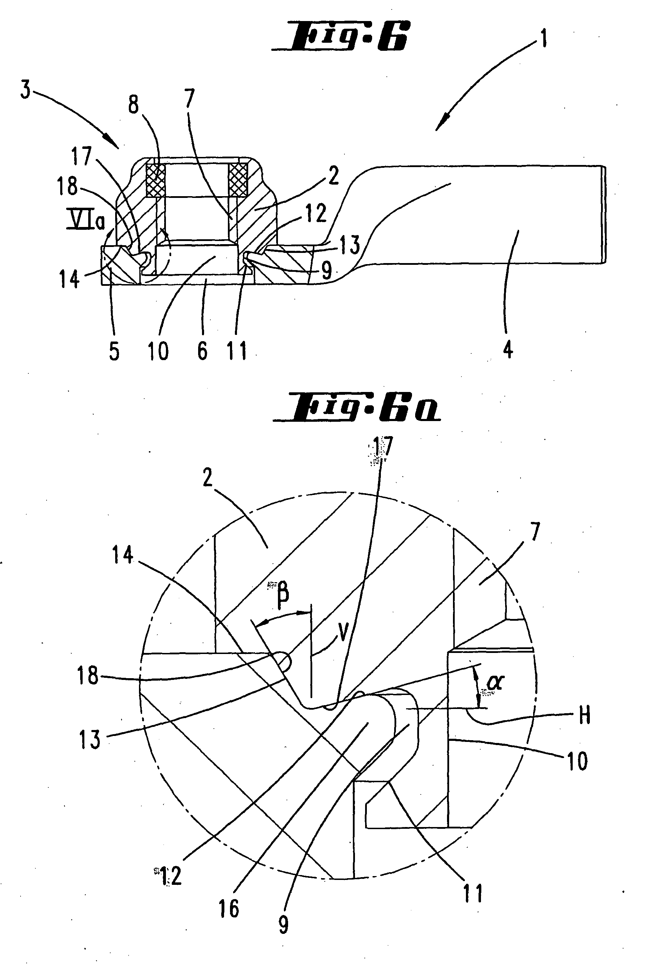

Dagegen ist in den Figuren 5 und 6 der Zustand nach Verpressung dargestellt.

Wesentlich ist, dass aus dem Flachteil-Verbindungsabschnitt 5 ein Halterungs-Materialabschnitt 16 ausgeformt ist, der sich in den Hinterschnitt 9 der Mutter 2 hinein erstreckt. Der Halterungs-Materialabschnitt 16 ist Teil der bereits erwähnten, sich im Flachteil 5 positiv ausbildenden Stufenfläche, die jedoch in gleicher Weise die bereits beschriebene Schrägausrichtung zu einer Horizontalen H bzw. Vertikalen V aufweist. Hierbei erstreckt sich der Halterungs-Materialabschnitt 16 deutlich nach radial innen über die im unteren Bereich, gesehen über die Dicke des Halterungs-Materialabschnittes 16 verbleibende Bohrung 6 mit ursprünglichem Durchmesser.

Die in dem Halterungs-Materialabschnitt 16 nach Verpressen geschaffene stufenartige Absenkung mit den Stufenflächen 17 und 18 ist rotationssymmetrisch über den Umfang der Bohrung 6 gebildet. Das heißt die Fläche ist gedanklich durch Rotieren einer Schablone erzeugt. Es gibt keine Hinterschnitte in der Fläche bezogen auf die Rotationsrichtung der angesprochenen gedanklichen Schablone (natürlich ist dies ein Formungsbeispiel, wie es gegebenenfalls bei Gussformen verwendet wird; dies ist hier nur angesprochen, um die Natur der rotationssymmetrischen Fläche zu verdeutlichen).

Der Halterungs-Materialabschnitt 16 ist in den Hinterschnitt 9 wie ersichtlich sowohl mit axialem wie auch mit radialem Spiel gefangen. Dieses Spiel ist allerdings vergleichsweise gering, wie sich erkennen lässt, größenordnungsmäßig im Bereich der Gewindetiefe des Innengewindes 7 der Mutter 2, also im Millimeter- bzw. Zehntelmillimeterbereich.

Der Hinterschnitt 9 ist außerhalb eines Gewindes 7 der Mutter 2 oder des Funktionsteils 3 ausgebildet.

Auch der Halterungs-Materialabschnitt 16 selbst ist rotationssymmetrisch ausgebildet. Der Hinterschnitt 9 befindet sich im Verpresszustand vollständig in seitlicher Überdeckung zu dem Halterungs-Materialabschnitt 16.

Die Konusfläche des Flachteil - Verbindungsabschnittes, in welche der Halterungs-Materialabschnitt 16 übergeht, ist rotationssymmetrisch ausgebildet.

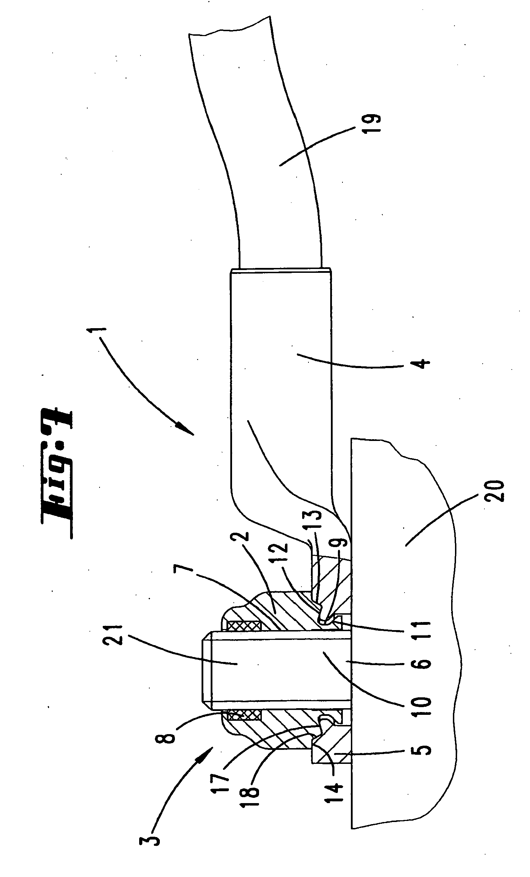

In Figur 7 ist der Verbindungszustand des Kabelschuh 1, mit darin befindlichem, eingepresstem Kabel 19 zu einem (elektrischen) Anschlussteil 20 dargestellt. Das Anschlussteil 20 weist einen Schraubschaft 21 auf, mit welchem die Mutter 2, die mit dem Kabelschuh 1 unverlierbar aber drehbar pressverbunden ist, aufgeschraubt ist. Es ergibt sich so eine gewünschte Druck-Anlageverbindung zwischen der Unterseite des Flachteil-Verbindungsabschnittes 5 und der Oberseite des Anschlussteiles 20.

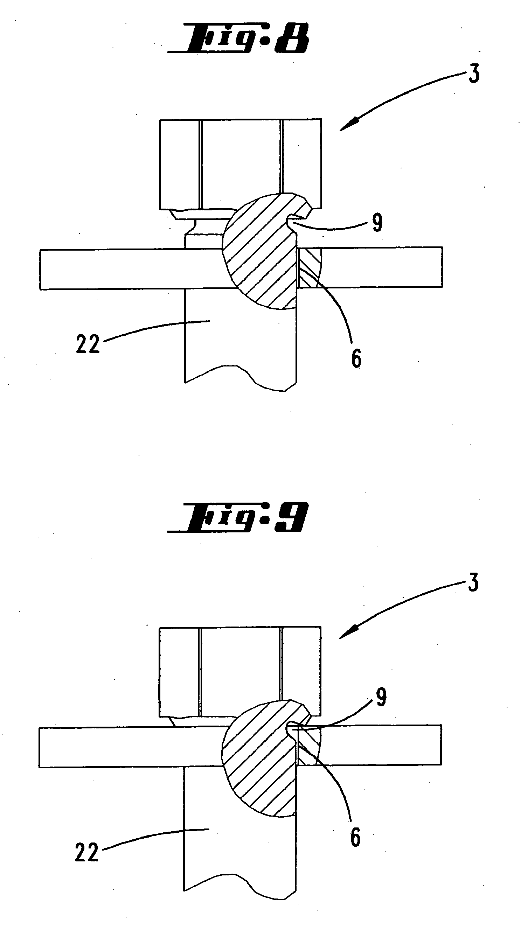

Die Ausführungsform der Figuren 8 und 9 zeigt ein Funktionsteil 3 in Form eines Schaftes 22 Gegebenenfalls kann es sich auch um eine Schraube handeln, bei welcher unterseitig des Hinterschnitts 9 noch ein Gewinde ausgebildet sein kann.

Die Innenfläche des den Hinterschnitt 9 bildenden Abschnitts ist im Fall der Mutter 2 zylindrisch ausgebildet.

Die Zylinderfläche 10 der Innenfläche des den Hinterschnitt 9 Bildenden Abschnitts geht in den Gewindegrund der Mutter 2 Über.

Die untere Begrenzungsfläche 11 des Hinterschnitts erstreckt sich in Vertikaler Projektion über mehr als die Hälfte der zugeordneten Stufenfläche.

Im Wesentlichen ergeben sich gleiche Verhältnisse wie bei der zu den Figuren 1 bis 7 beschriebenen Mutter 2. Nur dass der Schaft 22 des Funktionsteils 3 nun die Bohrung 6 durchsetzt. Zum Verpressen arbeitet man hier geeigneterweise mit einem Gegenhalter, der eine entsprechende Aufnahme oder Bohrung 6 für den Schaft 22 besitzt.

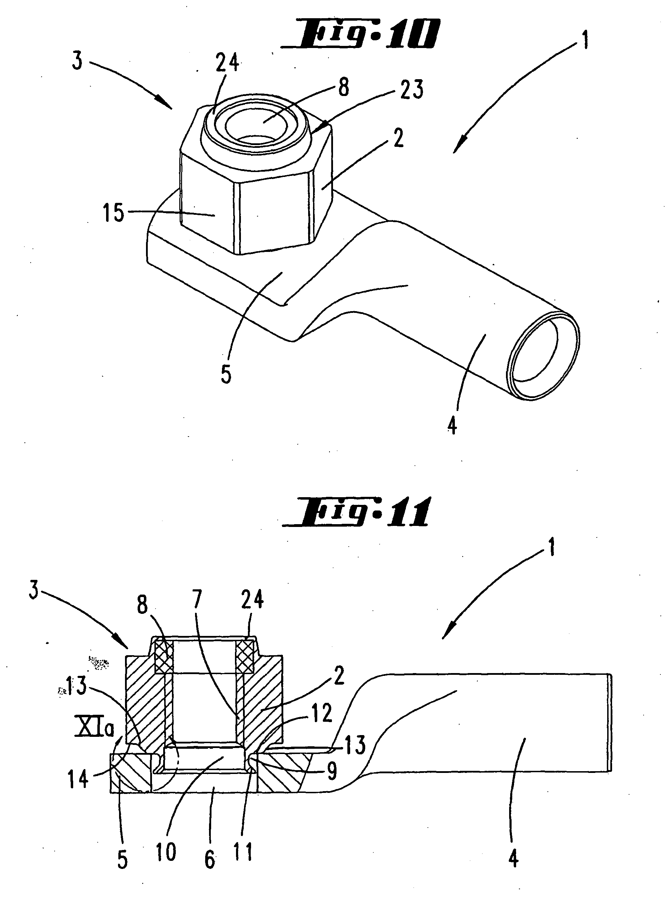

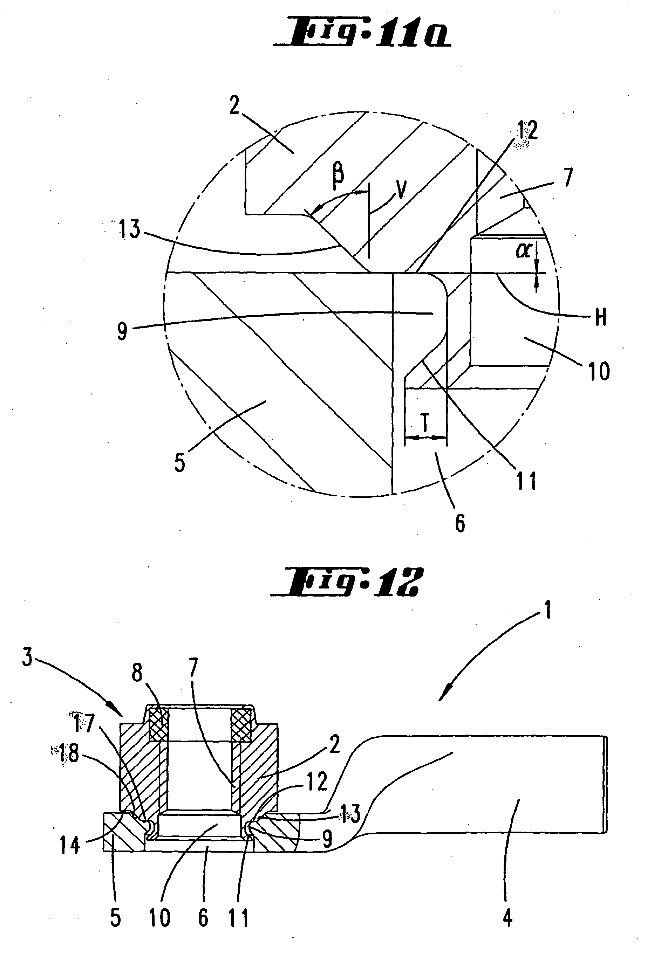

Mit Bezug zu den Figuren 10 und 11 ist zu erkennen, insbesondere etwa im Vergleich zu Figur 3, dass die Mutter 2 eine obere Ausformung 23 aufweist mit einer kreisringförmig umlaufenden ebenflächigen Pressfläche 24. Über diese Pressfläche 24 kann mittels eines geeigneten Druckwerkzeuges die notwendige Verpresskraft auf die Mutter 2 aufgebracht werden, um im Zuge des Verpressens die Herausbildung des Halterungs-Materialabschnittes 16 aus dem Flachteil-Verbindungsabschnitt 5 des Kabelschuhs 1 zu erreichen. Es erfolgt lediglich ein Eindrücken der Mutter von oben in den Flachteil-Verbindungsabschnitt 5, wie auch vorstehend schon beschrieben. Die Pressfläche 24 ist wesentlich kleiner als die projizierte Gesamtoberfläche der Mutter 2. Sie entspricht jedenfalls weniger als der Hälfte dieser projizierten Gesamtoberfläche.

Innerhalb des Aufbaus 23 ist das bereits angesprochene Kunststoffteil 8 aufgenommen, das entsprechend einer selbst sichernden Mutter, wie auch aus der Querschnittsdarstellung gemäß Figur 11 ersichtlich, innenwandig, die eine zylindrische Form hat, mit der inneren Gewindelinie der Schraube 2 fluchtet.

Wesentlich ist weiter bei der Ausführungsform der Figur 11, wie sich auch aus der Detaildarstellung der Figur 11a ergibt, dass hier der Winkel α mit 0° gewählt ist, dagegen der Winkel β mit 45°.

Wesentlich ist darüber hinaus, dass, wie sich aus Figur 12 ergibt, die Horizontalfläche 14 im Verpresszustand nicht auf dem Flachteil-Verbindungsabschnitt 5 aufliegt. Sie schwebt vielmehr gleichsam über dem Flachteil-Verbindungsabschnitt bei ordnungsgemäßer Verpressung. Mit anderen Worten ist die Presskraft so gewählt, dass bei der gegebenen Konfiguration der Stufenfläche eine Einpressung erfolgt, nur soweit, dass die Fläche 14 nicht zum Aufliegen auf den Flachteil-Verbindungsabschnitt 5 kommt Dies bevorzugt auch ohne Berücksichtigung der elastischen Rückstellung, die sich nach Entlastung der Mutter von der Presskraft ergibt. Derart also, dass die Fläche 14 zu keinem Zeitpunkt der Verpressung in Berührung mit der Oberfläche des Flachteil-Verbindungsabschnittes 5 kommt.

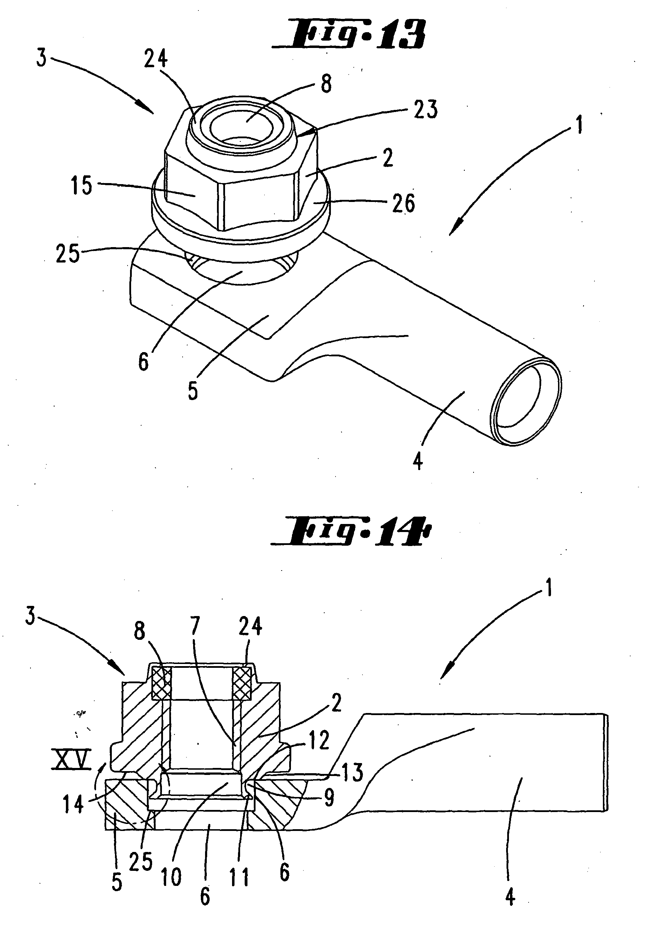

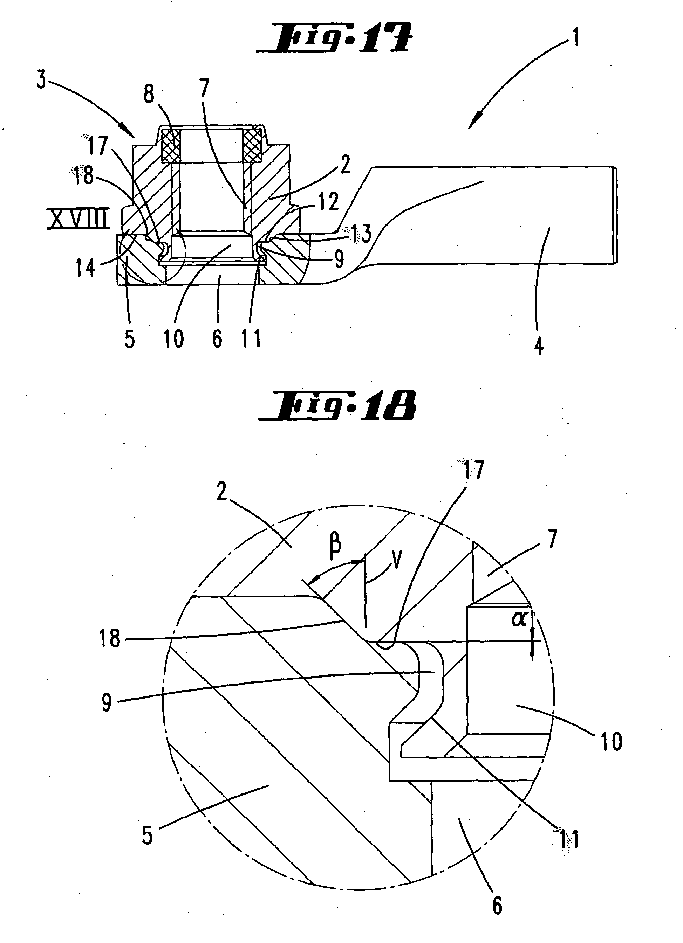

Bei der Ausführungsform der Figuren 13 bis 18 ist zunächst wesentlich, dass die Bohrung (6) in Axialrichtung gestuft ausgebildet ist. Ausgehend von einem größeren Durchmesser oben, zugeordnet dem Funktionsteil bzw. konkret der Mutter 3 geht die Bohrung unten über eine Bohrungsstufe 25 in einen kleineren Durchmesser über. Die Bohrungsstufe 25 springt zum inneren hin vor. Die Bohrungsstufe 25 ist mittensymmetrisch bezüglich einer Längsachse der Bohrung ausgebildet.

Die Bohrungsstufe 25 dient dazu, die Fläche auf der Unterseite des Flachteil-Verbindungsabschnittes, in der Umgebung der Bohrung 6, zu vergrößern. Dies, weil bei einem Anwendungsfall der Flachteil-Verbindungsabschnitt zusammen mit der Mutter 3 auf einen abgestuften, oberseitig ein Gewinde aufweisenden Bolzen aufgesetzt und aufgeschraubt wird. Der Flachteil-Verbindungsabschnitt muss entsprechend auf einer relativ schmalen, kreisförmig umlaufenden Fläche des Bolzens aufsitzen. Durch die beschriebene Bohrungsstufe 25 kann diese Aufsitz- und damit Kontaktfläche vorteilhaft vergrößert werden.

Die Bohrungsstufe 25 ist tiefenmässig ausserhalb des unteren Bereichs der Mutter im Verpresszustand ausgebildet.

Herstellungstechnisch lässt sich beispielsweise so verfahren, dass der obere Abschnitt der Bohrung 6 eingepresst wird und sodann in einen zweiten Arbeitsschritt der untere Bereich der Bohrung, unter Belassung der Bohrungsstufe 25, ausgeschnitten oder ausgestanzt wird. Entsprechend kann man bei dem Kabelschuh im unteren Bereich der Bohrung eine Schnittkante feststellen im oberen Bereich dagegen eine plastische Verformung.

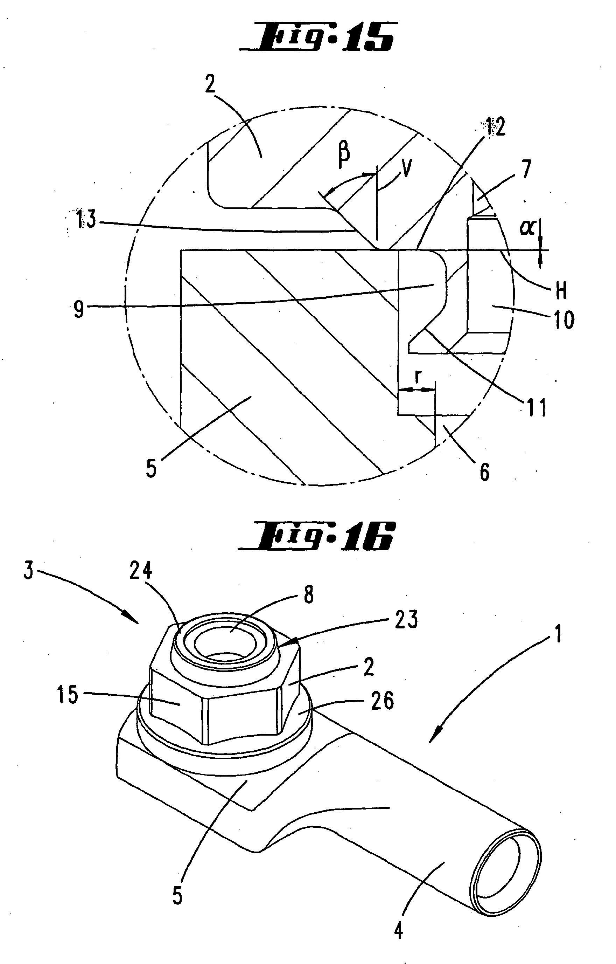

Ein Radialmaß r, vergleiche Figur 15, der Bohrungsstufe 25 entspricht bevorzugt der radialen Tiefe T, vergleiche etwa Figur 11a, des Hinterschnitts 9. Die genannte radiale Tiefe T des Hinterschnitts 9 kann hierbei im Weiteren auch der vertikalen Höhe der Vertikalfläche bzw. der Stufenfläche 13,17 entsprechen.

Weiter ist bei der hier beschriebenen Ausführungsform von Bedeutung, dass im Falle der dargestellten Mutter 3 unterseitig an die Mutter ein umlaufender Druckflansch 26 angeformt ist. Dieser Druckflansch 26 erstreckt sich von der unteren Horizontalfläche 14 über eine Höhe, die etwa einem Drittel der vertikalen Höhe des Kopfes des Funktionsteils bzw. hier der Mutter 3 entspricht, wobei diese Höhe gemessen ist von der Horizontalfläche 14 bis zu der Pressfläche 24.

Die Horizontalfläche 14 ist in ihrem radial änßeren Bereich Teil eines gegenüber dem Kopf des Funktionsteils radial abgesetzten Druckflansch 26.

Soweit ein Horizontalflansch 26 wie hier beschrieben bei dem Funktionsteil bzw. der Mutter vorgesehen ist, kommt es auf die Pressfläche 24 vorrangig nicht mehr an. Sie kann auch ganz wegfallen oder so ausgebildet sein, wie sie beispielsweise in den Figuren 1 bis 7 dargestellt ist.

Der Druckflansch 26 dient dazu, ein Druckwerkzeug aufsetzen zu können. Über diesen Druckflansch können dann relativ hohe Druckkräfte zum Pressverbinden des Funktionsteils bzw. der Mutter 3 mit dem Kabelschuh 1 aufgebracht werden.

Die Hinterschnitt 9 liegt innerhalb eine vertikalen Projektion des Kopfs, gegebenenfalls reduziert um den Flansch 26.

Da sich hierdurch eine wesentlich größere untere Horizontalfläche 14 ergibt als es der Mehrkantkontur der Mutter 3 entspricht, ist dies auch vorteilhaft im Hinblick auf das beschriebene Pressverfahren, das nämlich kraftabhängig gesteuert werden kann bis zu einem starken Anstieg der Verpresskraft, der das Aufsetzen der Horizontalfläche 14 auf dem Flachteil-Verbindungsabschnitt 5 des Kabelschuhs 1 signalisiert.

Die radiale Ausdehnung des Druckflansches 26 gegenüber einer Flachseite des Mehrkantes der Mutter 3 entspricht in der kleinsten radialen Erstreckung einem Zwanzigstel bis einem Fünftel des Durchmessermaßes der Schraube 3, gemessen im Bereich des Mehrkantes und mittig bezüglich einer Abflachung.

Die Oberfläche, auf welche das Druckwerkzeug aufsitzen kann, des Druckflansches 26 kann leicht geneigt nach unten verlaufen, kann aber auch horizontal verlaufen.

Die vertikale Höhe der Bohrung 6 im Bereich des kleineren Durchmessers, also, von oben gesehen, unterhalb der Bohrungsstufe 25, ist so gewählt, dass auch im Verpresszustand der untere Abschluss des Hinterschnitts 9 des Funktionsteils nicht auf der Stufe aufliegt. Beim Ausführungsbeispiel endet wie ersichtlich die Schraube einschließlich des Hinterschnitts 9 auch im Verpresszustand oberhalb der Bohrungsstufe 25.

Die zuletzt beschriebene Ausführungsform hinsichtlich des Funktionsteils bzw. konkret der Mutter 3 kann auch mit einer Bohrung kombiniert sein, wie sie weiter vorne beschrieben ist. Andererseits können die Funktionsteile wie sie weiter vorne beschrieben sind auch mit einer Bohrung kombiniert sein, wie sie zu dem zuletzt beschriebenen Ausführungsbeispiel erläutert ist.

## Patentansprüche

1. Kabelschuh (1) mit einem Aufnahme-Rohrabschnitt (4) für das Kabel (19), einem angeformten, eine Bohrung (6) aufweisenden Flachteil-Verbindungsabschnitt (5) und einem an dem Flachteil-Verbindungsabschnitt (5) unverlierbar gehalterten, vorzugsweise drehbar gehalterten, Funktionsteil (3), wie einer Mutter (2), wobei das Funktionsteil (3) durch einen in einen an diesem ausgebildeten Hinterschnitt (9) hineinragenden Halterungs-Materialabschnitt (16) gehaltert ist, der in einem zu dem unbeeinflussten umgebenden Bereich des Flachteil Verbindungsabschnittes (5) stufenartig abgesenkten Bereich wurzelt, wobei der Hinterschnitt (9) mit einer axialen Erstreckung ausgebildet ist, die gleich oder kleiner der axialen Erstreckung, der Dicke, des unbeeinflussten Flachteil-Verbindungs-abschnittes (5) ist, **dadurch gekennzeichnet, dass** die stufenartige Absenkung rotationssymmetrisch ist sowie einen sich nach außen und oben öffnenden, mindestens eine Konusfläche aufweisenden Konusabschnitt aufweist.

2. Kabelschuh nach Anspruch 1, **dadurch gekennzeichnet, dass** der Halterungs-Materialabschnitt (16) mit radialem Spiel in dem Hinterschnitt (9) aufgenommen ist.

3. Kabelschuh nach einem der vorhergehenden Ansprüche, **dadurch gekennzeichnet, dass** der Halterungs-Materialabschnitt (16) eine dem Funktionsteil (3) zugewandte Oberfläche aufweist, die unmittelbar in eine Konusfläche des Flachteil-Verbindungsabschnittes (5) übergeht.

4. Kabelschuh nach einem der vorhergehenden Ansprüche, **dadurch gekennzeichnet, dass** der Halterungs-Materialabschnitt (16) rotationssymmetrisch ausgebildet ist.

5. Kabelschuh nach einem der Ansprüche 1 bis 4, **dadurch gekennzeichnet, dass** jedenfalls eine der Konusflächen (17,18) des Konusabschnitts in einem spitzen Winkel zu einer Horizontalen (H) bzw. einer Vertikalen (V) verläuft.

6. Kabelschuh nach einem der vorhergehenden Ansprüche, **dadurch gekennzeichnet, dass** sowohl eine obere wie auch eine untere Begrenzungsfläche (12, 11) des Hinterschnitts (9) sich im Verpresszustand in seitlicher Projektion in Überdeckung zu dem Flachteil-Verbindungsabschnitt (5) befindet.

7. Kabelschuh nach einem der vorhergehenden Ansprüche, **dadurch gekennzeichnet, dass** eine obere Begrenzungsfläche (12) des Hinterschnitts (9) Teil einer Stufenfläche (17) ist.

8. Kabelschuh nach einem der vorhergehenden Ansprüche, **dadurch gekennzeichnet, dass** die Bohrung (6) mit einer vor der Verpressung gegebenen Bohrungsstufe (25) ausgebildet ist.

9. Kabelschuh nach Anspruch 8, **dadurch gekennzeichnet, dass** die Bohrungsstufe (25) im unteren, dem Funktionsteil abgewandten Bereich der Bohrung (6) ausgebildet ist.

10. Verfahren zur Ausbildung einer unverlierbaren, aber eine Axial- und gegebenenfalls eine Drehbewegung ermöglichenden Verbindung eines Kabelschuhs (1) mit einem Funktionsteil (3) wie einer Mutter (2), wobei der Kabelschuh (1) einen Aufnahme-Rohrabschnitt (4) für das Kabel (19) und einen Flachteil-Verbindungsabschnitt (5) aufweist und das Funktionsteil (3) in den unverformten Flachteil-Verbindungsabschnitt (5) unter Eindringen in oder Durchsetzen einer darin ausgebildeten Bohrung (6) eingepresst wird, **dadurch gekennzeichnet, dass** im Zuge der Einpressung in dem Flachteil-Verbindungsabschnitt (5) eine rotationssymmetrisch umlaufende, stufenartige Fläche (17, 18) ausgebildet wird, wobei jedenfalls eine der Stufenflächen als Konusfläche in einem spitzen Winkel zu einer Horizontalen (H) oder einer Vertikalen (V) verlaufend ausgeformt wird.

11. Vorzugsweise in eine Bohrung eines Flachteil-Verbindungsabschnittes eines Kabelschuhs einsteckbare und darin verpressbare Mutter, wobei die Mutter vor Verpressung einseitig, bezogen auf Ihre Ein- oder Ausschraubrichtung, einen radial öffnenden, in Axialrichtung der Mutter gegebenen Hinterschnitt (9) mit einer oberen (12) und einer unteren (11) Begrenzungsfläche aufweist, **dadurch gekennzeichnet, dass** der Hinterschnitt rotationssymmetrisch ausgebildet ist und die obere Begrenzungsfläche (12) Teil einer an der Mutter ausgebildeten rotationssymmetrischen Stufenfläche (12, 13) ist.

12. Mutter nach Anspruch 11, **dadurch gekennzeichnet, dass** die Stufenfläche (12,13) aus einer Vertikalfläche (13) und einer Begrenzungsfläche (12) besteht.

13. Mutter nach Anspruch 12, **dadurch gekennzeichnet, dass** die Vertikalfläche (13) sich relativ zu einer Vertikalen (V) in einem spitzen Winkel (β) erstreckt.

14. Mutter nach Anspruch 12 oder 13, **dadurch gekennzeichnet, dass** die Begrenzungsfläche (12) sich relativ zu einer Horizontalen (H) in einem spitzen Winkel (α) erstreckt.

15. Mutter nach einem der Ansprüche 11 bis 14, **dadurch gekennzeichnet, dass** eine Stufenkante der Stufenflächen (12,13) in einem Abstand, der einem Radialmaß des Hinterschnitts (9) entspricht, radial außerhalb des Hinterschnitts liegt.

## Claims

1. Cable lug (1) with a tubular receiving portion (4) for the cable (19), an integrally formed flat part connecting portion (5) which has a hole (6), and a functional part (3) which is held captively, preferably held to be rotatable, on the flat part connecting portion (5), the functional part (3) such as a nut (2) being held by a holding material portion (16) which projects into an undercut (9) formed on said functional part, this holding material portion being rooted in a region sunk-in in a step-like manner with respect to the unaffected surrounding region of the flat part connecting portion (5), the undercut (9) being formed with an axial extent which is equal to or less than the axial extent of the thickness of the unaffected flat part connecting portion (5), **characterized in that** the step-like sunk-in region is rotationally symmetrical and has a conical portion which is open outward and upward and has at least one conical surface.

2. Cable lug according to Claim 1, **characterized in that** the holding material portion (16) is accommodated in the undercut (9) with radial play.

3. Cable lug according to any of the preceding claims, **characterized in that** the holding material portion (16) has a surface which faces the functional part (3) and merges directly into a conical area of the flat part connecting portion (5).

4. Cable lug according to any of the preceding claims, **characterized in that** the holding material portion (16) is formed to be rotationally symmetrical.

5. Cable lug according to either of Claims 1 to 4, **characterized in that** at least one of the conical surfaces (17, 18) of the conical portion runs at an acute angle to a horizontal (H) or a vertical (V).

6. Cable lug according to any of the preceding claims, **characterized in that** both an upper and a lower delimiting surface (12, 11) of the undercut (9) overlap the flat part connecting portion (5) in the pressed state in a lateral projection.

7. Cable lug according to any of the preceding claims, **characterized in that** an upper delimiting surface (12) of the undercut (9) is part of a stepped area (17).

8. Cable lug according to any of the preceding claims, **characterized in that** the hole (6) is formed with a hole step (25) which is provided before the pressing.

9. Cable lug according to Claim 8, **characterized in that** the hole step (25) is formed in the lower region of the hole (6) which faces away from the functional part.

10. Method for forming a connection of a cable lug (1) to a functional part (3), such as a nut (2), the connection being captive but allowing axial and possibly rotary movement, the cable lug (1) having a tubular receiving portion (4) for the cable (19) and a flat part connecting portion (5), and the functional part (3) being pressed into the undeformed flat part connecting portion (5) by penetrating or passing through a hole (6) which is formed therein, **characterized in that** a rotationally symmetrical circumferential step-like area (17, 18) is formed in the flat part connecting portion (5) in the course of the pressing-in process, at least one of the step surfaces being formed as a conical surface running at an acute angle to a horizontal (H) or a vertical (V).

11. Preferably into a hole in a flat part connecting portion of a cable lug insertable and therein press fittable nut, which nut is provided with, prior to pressing, on one end of the nut, in relation to its tightening or loosening direction, having a radially opening undercut (9) which is provided in the axial direction of the nut and has an upper delimiting surface (12) and a lower delimiting surface (11), **characterized in that** the undercut is formed to be rotationally symmetrical and the upper delimiting surface (12) is part of a rotationally symmetrical stepped area (12, 13) which is formed on the nut.

12. Nut according to claim 11, **characterized in that** the stepped area (12, 13) has a vertical surface (13) and a delimiting surface (12).

13. Nut according to claim 12, **characterized in that** the vertical area (13) does extend relatively to a vertical (V) with an acute angle (β).

14. Nut according to claim 12 or 13, **characterized in that** the limiting area (12) does extend relatively to a horizontal (H) in an acute angle (α).

15. Nut according to any of Claims 11 to 14, **characterized in that** a step edge of the step surfaces (12, 13) is positioned radially outside the undercut at a spacing which corresponds to a radial extent of the undercut (9).

## Revendications

1. Cosse de câble (1) avec une section tubulaire de logement (4) pour le câble (19), une section de raccordement en pièce plate (5) moulée présentant un alésage (6) et une pièce de fonction (3) logée à rétention permanente, de préférence à rotation, sur la section de raccordement en pièce plate (5), comme un écrou (2), la pièce de fonction (3) étant maintenue par une section de matériau de retenue (16) pénétrant dans une découpe postérieure (9) conçue sur celle-ci, qui trouve son origine dans une zone descendant progressivement vers la zone périphérique non-influencée de la section de raccordement en pièce plate (5), la découpe postérieure (9) étant conçue avec une extension axiale qui est identique ou inférieure à l'extension axiale de l'épaisseur de la section de raccordement en pièce plate (5) non influencée, **caractérisée en ce que** l'abaissement progressif est à symétrie de rotation et présente une section conique possédant au moins une surface conique et s'étendant vers l'extérieur et vers le haut.

2. Cosse de câbles selon la revendication 1, **caractérisée en ce que** la section de matériau de retenue (16) est logée avec un jeu radial dans la découpe postérieure (9).

3. Cosse de câbles selon l'une des revendications précédentes, **caractérisée en ce que** la section de matériau de retenue (16) présente une surface tournée vers la pièce de fonction qui se prolonge directement dans une surface conique de la section de raccordement en pièce plate (5).

4. Cosse de câble selon l'une des revendications précédentes, **caractérisée en ce que** la section de matériau de retenue (16) est conçue à symétrie de rotation.

5. Cosse de câble selon l'une des revendications 1 à 4, **caractérisée en ce que** l'une des surfaces coniques (17,18) de la section conique s'étend en tout cas dans un angle aigu par rapport à l'horizontale (H) ou à la verticale (V).

6. Cosse de câble selon l'une des revendications précédentes, **caractérisée en ce que** tant une surface de délimitation supérieure qu'inférieure (12,11) de la découpe postérieure (9) se trouve dans un état de compression en projection latérale en recouvrement de la section de raccordement en pièce plate (5).

7. Cosse de câble selon l'une des revendications précédentes, **caractérisée en ce qu'**une surface de délimitation supérieure (12) de la découpe postérieure (9) fait partie d'une surface étagée (17).

8. Cosse de câble selon l'une des revendications précédentes, **caractérisée en ce que** l'alésage (6) est conçu avec une étape d'alésage (25) prévue avant la compression.

9. Cosse de câble selon la revendication 8, **caractérisée en ce que** l'étape d'alésage (25) est conçue dans la zone inférieure de l'alésage (6) opposée à la pièce de fonction.

10. Procédé de conception d'une fixation à rétention permanente permettant toutefois un mouvement axial et éventuellement rotatif d'une cosse de câble (1) avec une pièce de fonction (3) comme un écrou (2), la cosse de câble (1) présentant une section tubulaire de logement (4) pour le câble (19) et une section de raccordement en pièce plate (5) et la pièce de fonction (3) étant pressée dans la section de raccordement en pièce plate (5) non déformée en pénétrant ou en traversant un alésage (6) conçu dans celle-ci, **caractérisé en ce qu'**au cours de compression dans la section de raccordement en pièce plate (5), il est conçu une surface étagée (17,18) tournant à symétrie de rotation, l'une des surfaces étagées étant en en tout cas formée comme une surface conique s'étendant dans un angle aigu par rapport à l'horizontale (H) ou la verticale (V).

11. Ecrou à enfoncer de préférence dans un alésage d'une section de raccordement en pièce plate d'une cosse de câble et qui peut être pressé dans celle-ci, l'écrou présentant unilatéralement avant la compression, par rapport à son sens de vissage ou de dévissage, une découpe postérieure (9) s'ouvrant radialement et formée dans la direction axiale de l'écrou avec des surfaces de délimitation supérieure (12) et inférieure (11), **caractérisé en ce que** la découpe postérieure est conçue à asymétrie de rotation et la surface de délimitation postérieure (12) fait partie d'une surface étagée (12, 13) à symétrie de rotation conçue sur l'écrou.

12. Ecrou selon la revendication 11, **caractérisé en ce que** la surface étagée (12,13) se compose d'une surface verticale (13) et d'une surface de délimitation (12).

13. Ecrou selon la revendication 12, **caractérisé en ce que** la surface verticale (13) s'étend en angle aigu (β) par rapport à la verticale (V).

14. Ecrou selon l'une des revendications 12 ou 13, **caractérisé en ce que** la surface de délimitation (12) s'étend dans un angle aigu (α) par rapport à l'horizontale (H).

15. Ecrou selon l'une des revendications 11 à 14, **caractérisé en ce qu'**un bord étagé des surfaces étagées (12, 13) se trouve radicalement l'extérieur de la découpe postérieure dans un intervalle qui correspond à la mesure radiale de la découpe postérieure (9).
